# EUROPEAN PATENT SPECIFICATION

(11) **EP 0 264 057 B1**
(45) Date of publication and mention of the grant of the patent: **09.06.1993**
(21) Application number: 87114611.4
(22) Date of filing: 07.10.1987
(51) Int. Cl.: H04N 5/232, G01N 21/88

(54) **Automatic focusing system for observing means for inspecting an object**
Automatisches Fokussierungsverfahren für Mittel zur Untersuchung eines Objekts
Système de focalisation automatique par des moyens d'observation pour l'inspection d'un objet

(30) Priority: 07.10.1986 JP 238801/86
(43) Date of publication of application: 20.04.1988
(73) Proprietor: FUJITSU LIMITED, Kawasaki-shi, Kanagawa 211 (JP)
(72) Inventor: Ikeda, Hiroshi c/o Fujitsu Ltd. Patent Dept., Nakahara-ku Kawasaki-shi Kangawa 211 (JP); Takeshita, Shuji c/o Fujitsu Ltd. Patent Dept., Nakahara-ku Kawasaki-shi Kangawa 211 (JP)
(74) Representative: Sunderland, James Harry

(56) References cited:
- DE-A- 3 341 844
- JP-A-62 180 252
- US-A- 4 350 884
- PATENT ABSTRACTS OF JAPAN, vol. 7, no. 290 (P-245)[1435], 24th December 1983; & JP-A-58 162 844

## Description

The present invention relates to an automatic focussing system, for example operating with a TV (television) camera, for inspecting a surface of an object to be viewed, and, more particularly, but not exclusively, to an automatic focussing system, operating with a TV camera, for inspecting printed patterns on a printed wiring board.

Recently, patterns printed on printed wiring boards have become very fine, so that when such printed patterns are inspected using a TV camera, the entirety of the patterns on a printed wiring board cannot be inspected all at once. Therefore, a plurality of inspecting points are previously designated on the printed wiring board such that a part, to be inspected, of the printed patterns exists around each inspecting point. The printed patterns on the printed wiring board are inspected by sequentially inspecting these parts of the printed patterns, by aligning the line of sight of the TV camera with the relevant inspecting points, point by point. Furthermore, recently, printed wiring boards (which will be called simply "boards" hereinafter), have been scaled up and board thickness has been increased, with the boards including a plurality of layers. Accordingly, a board can suffer phenomena such as warping and local variation of thickness. Such phenomena give rise to differences in the distances from the TV camera to respective inspecting points. (TV camera to inspecting point distance, mentioned above, will be called "inspecting camera distance" hereinafter). For example, when inspecting a board having a size of 300 mm × 300 mm and a large number of layers, for example 14 layers, the inspecting camera distance can vary as much as 1.5 mm at maximum. Further, when the size of the board is large, many inspecting points must be designated on the board, and focussing of the TV camera for each inspecting point must be performed "automatically" at a high speed.

Recently, in an automatic focussing system, active means such as an infrared ray or ultrasonic waves have been used for measuring the inspecting camera distance. That is, previously, the TV camera has been automatically focused by measuring the inspecting camera distance by using an infrared ray or ultrasonic transmitting and receiving apparatus along with the TV camera. Furthermore, previously, inspecting a printed pattern around an inspecting point and shifting the board so as to align the line of sight of the TV camera with a next inspecting point have been performed automatically. Such automatic inspection of printed patterns on a board has been automatically performed in accordance with the following steps: (A) aligning the TV camera with an inspecting point by shifting the board, for example, in X and Y directions; (B) measuring the inspecting camera distance by means of infrared or ultrasonic transmitting and receiving apparatus; (C) adjusting a focussing mechanism of the TV camera, using the measured distance; (D) inspecting a printed pattern around the inspecting point; (E) aligning the TV camera with a next inspecting point by shifting the board; and (F) repeating the above steps from (B) to (E) until the printed patterns around all of the inspecting points have been inspected, in other words, until pattern inspection of the board is completed.

When the printed patterns on a board are very fine, many inspecting points are necessary for the inspection of the printed patterns, and a very long period of time is required for completing the inspection of the printed patterns at the many inspecting points, resulting in increased fabrication costs for the board. Generally, the number of the inspecting points depends on the size of the board, the density of printed patterns on the board and characteristics of the TV camera, such as field of view (FOV) and resolution thereof. For example, when the board has a size of 300 mm × 300 mm, the printed patterns have a density such that wiring patterns, each having a width of 0.2 mm, are arranged with 0.5 mm pitch and a SONY XC-38 type is used as the TV camera, at least 2,000 inspecting points are required on one side surface of the board (4,000 inspecting points are required on the two side surfaces of the board). The SONY XC-38 type TV camera has an FOV such that an area 2.56 mm × 2.56 mm in size can be viewed on a surface of the board with a resolution such that the above FOV can be resolved into 491 × 384 picture elements. In the above case, to perform the step (A) or step (E), and steps (B) and (C), a time of approximately 3 sec is required (approximately 1 sec for each step. Approximately 3 sec are required for the real inspection in step (D), so that a time of 6 sec is required for inspecting the printed pattern around one inspecting point. Therefore, a time of 6,000 sec (3 sec/inspecting point × 2,000 inspecting point = 1 hour and 40 minutes), is required for carrying out step (A) or step (E), and steps (B) and (C) in relation to all the inspecting points on one side surface of the board, and a time of 12,000 sec (6 sec/inspecting point × 2,000 inspecting point = 12,000 sec = 3 hours and 20 minutes) is required for inspecting the printed patterns on one side surface of the board. Taking such a long time for inspecting the printed patterns on one side surface of the board results in reduced productivity and increased production costs for the boards. Therefore, the problem of reducing this long time is of considerable importance. If the time required to perform step (B) (for measuring inspecting camera distance) is reduced to zero, 33 minutes can be saved.

A similar focussing system is disclosed in US-A-4 350 884, but in this case the focussing is effected by autocorrelation analysis.

An embodiment of the present invention provides a system for inspecting the surface of an object in which compensation is effected for variations of the distance between the surface of the object and observation means (e.g. a TV camera).

The distance may, for example, be that between a TV camera and a part of the printed patterns on a surface of a printed wiring board.

An embodiment of the present invention can provide for an increase in the speed of automatic inspection, performed using a TV camera, of printed patterns on a printed wiring board.

An embodiment of the present invention can provide for an increase in the speed of automatic inspection, performed using a TV camera, of printed patterns on a large sized printed wiring board having a warp and a locally different thickness.

An embodiment of the present invention can provide for increase in productivity in the production of printed wiring boards, and for a reduction in the production costs of the printed wiring boards.

In an embodiment of the present invention means are provided for carrying out the following steps: (1) designating in advance a plurality of reference points on a surface of a printed wiring board (board) on which patterns to be inspected are printed. Taking into consideration warping and locally different thicknesses of the board which may arise, for example 9 reference points, consisting of a centre point, 4 corner points and 4 middle points of 4 sides of a four-sided board, are designated as the reference points; (2) measuring distances from the TV camera to the reference points; (3) providing a plurality of for example triangular planes (8 triangular planes in case of the 9 reference points of the above example), each formed by connecting three neighbouring reference points, and calculating a plurality of plane equations (8 plane equations in case of 9 reference points); wherein the plane equations are calculated considering the board in terms of X, Y and Z coordinates with the board corresponding (generally) to an X-Y plane and the direction of the line of sight of the TV camera corresponding to the Z axis; (4) designating an inspecting point around which a printed pattern, which is a part of the printed patterns on the board, to be inspected exists; (5) calculating a Z coordinate of the inspecting point by substituting X and Y coordinates of the inspecting point into the plane equation of the triangular plane to which the X and Y coordinates of the inspecting point belong, and calculating a distance (inspecting camera distance) between the TV camera and the inspecting point; (6) performing focus adjustment of the TV camera by using the Z coordinate calculated in the above step (5); (7) positioning the board so that the inspecting point is in the line of sight of the TV camera; (8) inspecting the printed pattern around the inspecting point by TV observation of the printed pattern; and (9) positioning the board so that a next inspecting point is in the line of sight of the TV camera.

In the above steps, the steps (1), (2) and (3) are performed before starting actual inspection of the printed patterns on the board, and steps (4), (5) and (6) are performed during execution of step (7). In this way, time wasted in previous proposals for measuring the distance between the TV camera and inspecting point can be reduced to zero, which reduces the time required for steps other than the actual inspection (step 8) from 3 sec (as in previous proposals) to 2 sec.

In an embodiment of the present invention, measurement of the distance between the TV camera and a reference point stated in step (2) above can be passively performed (by using a slit mark) and not performed by active means such as infrared or ultrasonic means as used in previous proposals. Applying such passive means, equipment costs for an automatically focussing system can be reduced.

With an embodiment of the present invention, in the course of inspection, the time required for a step corresponding to step (B) of previous systems is reduced in substance to zero.

In an embodiment of the present invention, even though, as stated above, the distance (inspecting camera distance) between the TV camera and the inspecting point is estimated from the calculation of a plane equation, the accuracy of the inspecting camera distance obtained is sufficiently high.

Reference is made, by way of example, to the accompanying drawings, in which:-
Fig. 1 is a schematic block diagram illustrating principle parts of an automatic focussing system embodying the present invention;
Fig. 2 is a flowchart for assistance in explaining operational steps carried out in an automatic focussing system embodying the present invention;
Fig. 3 is a more detailed block diagram of an automatic focussing system embodying the present invention;
Fig. 4 is a schematic plan view of a printed wiring board, illustrating a plurality of reference points and triangular planes;
Fig. 5(a) is a pattern illustration of a slit mark depicted in an X-Y coordinate system;
Fig. 5(b) is a distribution chart of the slit mark;
Fig. 6 is a schematic block diagram of an automatic focussing system embodying the present invention, illustrating the obtaining of a distance between a TV camera and an inspecting point by using a slit mark;
Fig. 7 gives a plurality of plane equations;
Figs. 8(a) and 8(b) are diagrams for assistance in explaining the accuracy of distance assessments, between a TV camera and an inspecting point, obtained by an automatic focussing system embodying the present invention;
Fig. 9 is a diagram illustrating that four divided rectangles on a surface of a printed wiring board are further divided into eight triangles whose plane equations are determined;
Fig. 10 is a perspective view of a printed wiring board, for illustrating a plane separation, performed by an automatic focussing system embodying the present invention, of a printed wiring board; and
Fig. 11 is a graphical diagram for illustrating accuracy of distance assessment, between a TV camera and an inspecting point, obtained by an automatic focussing system embodying the present invention.

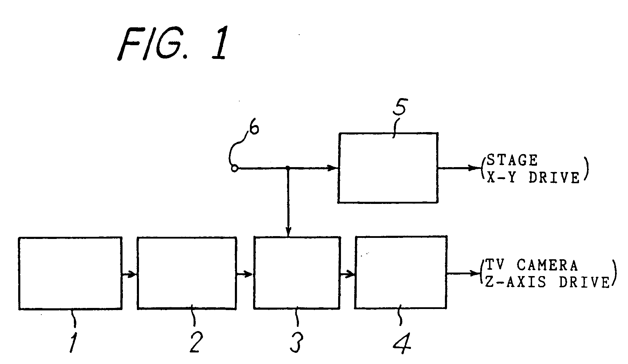

A schematic block diagram of an automatic focussing system embodying the present invention is shown in Fig. 1. In Fig. 1, each block shows the following means.
Block 1: means for measuring distances between a TV camera and reference points previously designated on a surface of a printed wiring board. For example 9 points, consisting of four corner points, four middle points of four sides and a centre point of a four-sided printed wiring board, can be designated as the reference points.
Block 2: means for calculating plane equations corresponding to triangular planes each formed by connecting three neighbouring reference points. For example, the number of the triangular planes is eight, when the number of the reference points is nine.
   In this example each of the sets of three reference points defining the triangular planes includes the centre point, one corner point and a side middle point. The points are selected, in general, so that the planes have no common areas.
Block 3: means for calculating a distance (camera inspecting distance) between the TV camera and an inspecting point around which a printed pattern, which is a part of the printed patterns on the board, exists. A signal giving X and Y coordinates for the inspecting point is fed from an input terminal 6 to the block 3 in which a triangular plane including the X and Y coordinates of the inspecting point is selected and the X and Y coordinates are substituted into the plane equation of the selected triangular plane so that the Z coordinate of the inspecting point is obtained. From the Z coordinate, the camera inspecting distance can be obtained.
Block 4: means for focussing the TV camera in accordance with the obtained inspecting camera distance.
Block 5: means for controlling a stage, on which the printed wiring board is mounted, so that the stage is shifted in X and Y directions for aligning a line of sight of the TV camera with a next inspecting point on the board.

In the above explanation, the means of blocks 1 and 2 can be said to perform "preliminary steps" in relation to the inspection, whilst the means of blocks 3, 4, 5 and inspecting means not shown in Fig. 1, can be said to perform "execution steps" for inspection.

When the inspection of the printed pattern around an inspecting point is complete, a signal for a next inspecting point is input and the stage is shifted as indicated above. However, at the same time, focussing of the TV camera for the next inspecting point is carried out by operation of the means of blocks 3 and 4 in order.

Accordingly, time required for focussing the TV camera is included in the time required for shifting the stage, so that a total time required for inspecting the printed pattern around an inspecting point is reduced.

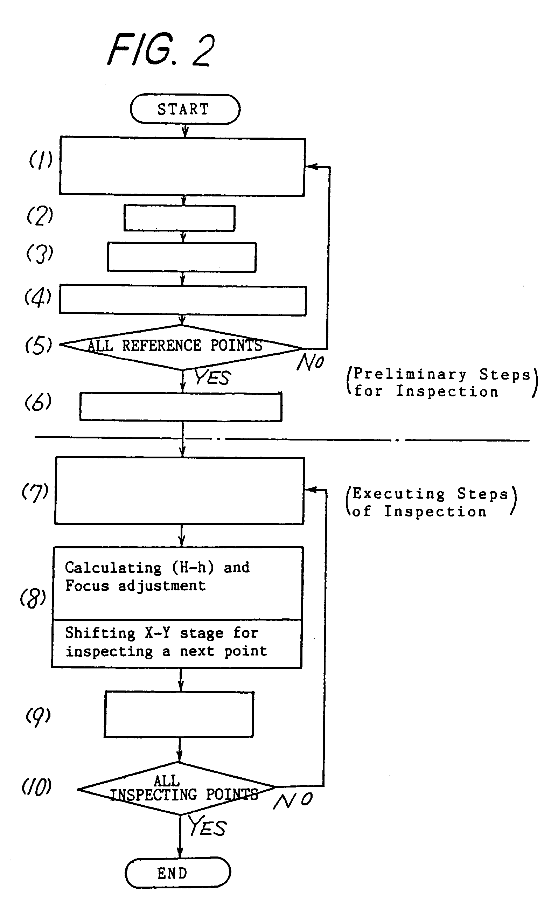

An embodiment of the present invention will now be explained in more detail, referring to Figs. 2 to 11.

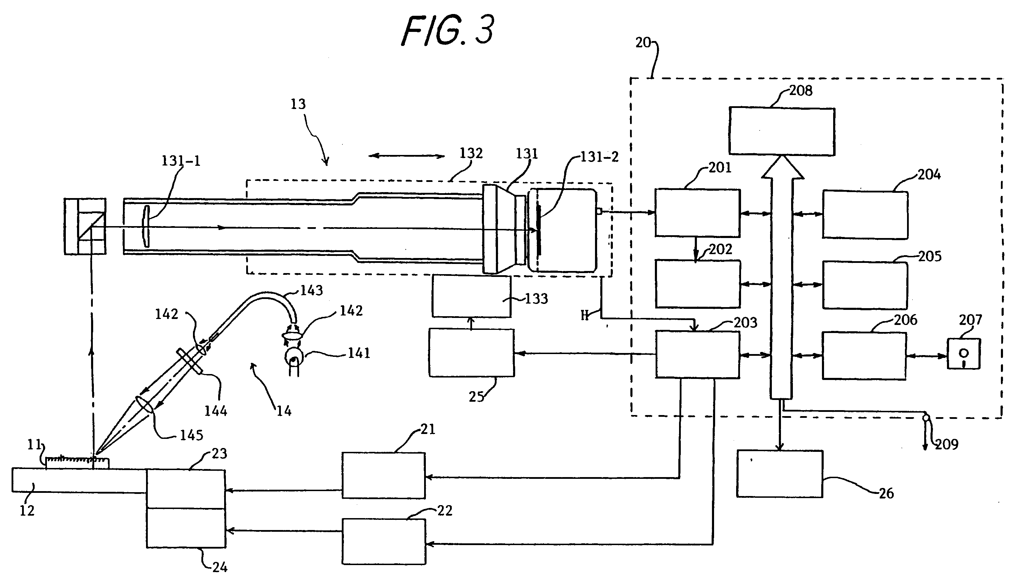

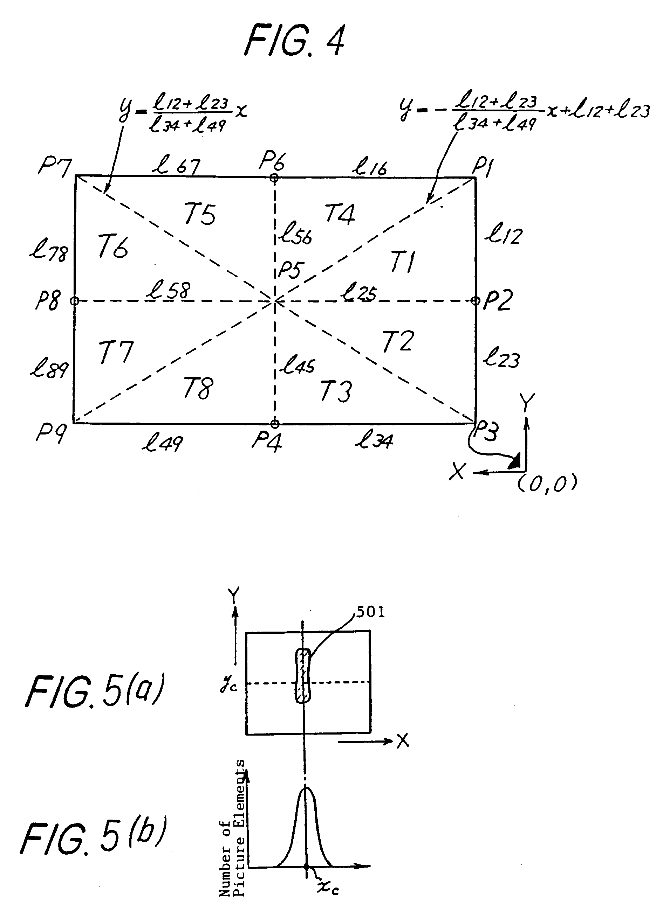

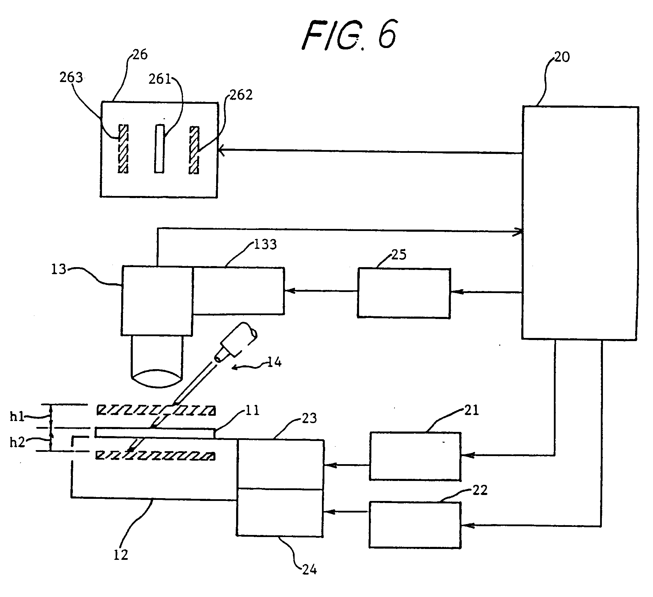

The details of functions performed in this embodiment of the invention will be explained in the order of steps shown in the flowchart of Fig. 2.
STEP (1) Points P1 to P9 consisting of four corner points, four middle points of four sides and one centre point of a four-sided printed wiring board (board) 11 (Fig. 3) are designated as reference points, as shown in Fig. 4, and signals representing X and Y coordinates of the 9 reference points are stored in a RAM (Random Access Memory) 205 in a processing unit 20 as shown in Fig. 3. An X and Y coordinates signal for one of the 9 reference points is read out and input to a mechanism control unit 203 in the processing unit. Then, the mechanism control unit 203 controls an X driver 21 and a Y driver 22, which are shown in Fig. 3, so as to position the board 11 so that the inspecting point is in the line of sight of a TV camera 13 as shown in Fig. 3. The board 11 is mounted on a stage 12, and the positioning of the board 11 is performed by an X pulse motor 23 and a Y pulse motor 24, which are shown in Fig. 3, controlled by an output signal from the mechanism control unit 203.
STEP (2) In this embodiment of the invention, distance between the TV camera 13 and the reference point is measured passively by using an optical slit mark projected aslant onto the board 11 from a mark projector 14 as shown in Fig. 3. The TV camera 13 comprises a lens 131-1, a CCD (Charge Coupled Device) 131-2, a focus adjusting mechanism 132 and a focus adjusting motor 133 as shown in Fig. 3. An image of the slit mark projected on the board 11 is formed on the CCD 131-2 passing through the lens 131-1, and an analog electric signal is output from the CCD 131-2 corresponding to the brightness of the image formed on the CCD 131-2. The output signal from the TV camera 13 (CCD 131-2) is fed to a signal processing board 201 in a processing unit 20 and converted to a digital signal, then the digital signal is stored in a frame memory 202 in the processing unit 20.
STEP (3) The digital signal stored in the frame memory 202 is processed to obtain a binary-coded signal by a CPU (Central Processing Unit) 208 in the processing unit 20, using a program stored in a ROM (Read Only Memory) 204 in the processing unit 20.
STEP (4) The binary-coded signal of the slit mark is processed by the CPU 208, using a program stored in the ROM 204, to obtain a centre point of the slit mark distribution along an X axis which passes through the centre of the Y coordinates of the slit mark. Fig. 5(a) shows a slit mark 501 depicted in an X-Y coordinate system, and Fig. 5(b) is a distribution chart with the X coordinate on a horizontal axis and number of picture elements, which is equal to the number of data values "1" in a unit small area, on a vertical axis. In Fig. 5(b), the centre point of the distribution is represented by a mark X_{c}. Position data of the X and Y coordinates for the centre points (X_{c}) of the 9 reference points are stored in the frame memory 202.
STEP (5) As shown in Fig. 3, a mark projector 14 comprises an optical source 141, relay lenses 142, an optical fiber 143, a slit piece 144 and a projection lens 145, so that a slit mark is projected aslant onto a surface of the board 11. Therefore, when distances from the TV camera to the reference points differ, having difference amounts hₗ and h₂ as shown in Fig. 6, an image is formed on the CCD 131-2 at different positions, as shown in a monitor 26 in Fig. 6. When the surface of the board 11 is higher than a normal position by an amount h₁, an image 262 of the slit mark is shifted in a right direction from a normal image 261 position, and when that is lower than a normal position by an amount h₂, an image 263 of the slit mark is shifted in a left direction from the normal image 261, as shown in an illustrated representation in TV monitor 26 in Fig. 6. Fig. 6 is a schematic block diagram of the automatic focussing system of this embodiment of the present invention, for illustrating the image shifting. In Fig. 6, the same reference numerals as in Fig. 3 designate the same blocks or parts as in Fig. 3. From the amount by which the image of the slit mark is shifted, the amount by which the distance between the TV camera and the reference point differs from the normal distance can be obtained. That is, an actual centre point of an actual image of the slit mark is obtained as stated in the STEP (5), and data (X coordinates) representing the actual centre point is compared with data, stored in the RAM 204, representing the normal centre point, so that the distance between the TV camera and the reference point can be obtained. Thus, the distances from the TV camera to the 9 reference points can be obtained. The above processes are performed by the CPU 208, using a program stored in the ROM 204.
STEP (6) Eight plane equations for eight triangular planes, formed on the board 11 by connecting 9 reference points as shown in Fig. 4, are obtained by the CPU 208, using a program stored in the ROM 204, and the 8 plane equations are stored in the RAM 205. The 8 plane equations are made by positioning the board 11 in X, Y and Z coordinates; the X and Y coordinates are formed by setting a plane of the stage 12 as the X and Y coordinate plane, and the Z coordinates are obtained from the distances, obtained in the above STEP (5), from the TV camera to the reference points. The obtained 8 plane equations are stored in the RAM 205.
STEP (7) An inspecting point is designated in accordance with a program stored in the ROM 204, and a Z coordinate of the inspecting point is calculated by substituting the X and Y coordinates of an inspecting point into the plane equation which includes the X and Y coordinates of the inspecting point. The obtained Z coordinate of the inspecting point will be treated as an "h" signal. The X and Y coordinates of the inspecting point are previously stored in the RAM 205. The calculation of the Z coordinate is performed by the CPU 208, using a program stored in the ROM 204.
STEP (8) In the focus adjustment mechanism 132, there is a signal generator (which is not shown in Fig. 3) for producing a focus position signal "H" for the TV camera 13. The signal H is fed into the mechanism control unit 203 and a difference (H - h) is calculated by the CPU 208 in accordance with a program stored in the ROM 204. The mechanism control unit 203 controls a focus adjustment driver 25 so that the focus adjusting motor 133 drives the focus adjusting mechanism 132 until the difference (H - h) becomes zero. When the difference (H - h) becomes zero, the focussing of the TV camera 13 is completed. During execution of the above STEP (7) and this STEP (8), the stage 12 is shifted under the control of the mechanism control unit 203 so that the inspecting point on the board 11 is on the line of sight of the TV camera 13. This control is also performed by the CPU 208 in accordance with a program stored in the ROM 204.
STEP (9) Then, the TV camera 13 observes the printed pattern around the inspecting point, so that an image of the printed pattern is formed on the CCD 131-2 in the TV camera 13. The CCD 131-2 converts the image to an analog video signal of the printed pattern. The analog video signal is fed to the signal processing board 201 in the processing unit 20 and converted to a digital video signal, and the digital video signal of the printed pattern is stored in the frame memory 202 by processing of the CPU 208 in accordance with a program stored in the ROM 204. The digital video signal stored in the frame memory 202 is compared with a normal (ideal) digital video signal stored in the RAM 205, in accordance with operation of the CPU 208, using a program stored in the ROM 204. Usually, digital video signals representing the (ideal) printed patterns on the board are stored on an FD (Floppy Disk) 207, and when an inspecting point is designated, a printed pattern is selected from the FD 207 by an FD controller 206 in accordance with a process performed by the CPU 208, using a program stored in the ROM 204. After the comparison between the digital video signal stored in the frame memory 202 and the normal digital video signal stored in the RAM 205, a signal representing the result of the inspection is output from an output terminal 209.
STEP (10) When the inspection of the printed pattern designated in the STEP (7) is determined to indicate that the pattern is satisfactory, the board 11 is shifted so that a next inspecting point is in the line of sight of the TV camera, and at the same time the STEPs (7), (8) and (9) are performed for the next inspecting point. This process is automatically continued until inspections of the printed patterns around all of the inspecting points are completed, unless an inspection result indicating a pattern to be unsatisfactory is generated during the inspection.

In the above STEPs, shifting the board 11, so that the inspecting point is in the line of sight of the TV camera, whilst calculation of (H - h) and focus adjustment are being performed, is a distinctive advantageous feature. By doing this, the time required for the inspection of the printed patterns on the board can be greatly reduced.

The derivation of the plane equation in STEP 6 of this embodiment of this invention will be described below.

First, the equation of a triangle T1 shown in Fig. 4 will be considered. The coordinates of the apexes P1, P2, P5 of the triangle T1 (0, l₁₂, z₁), (0, 0, z₂) and l₂₅, 0, z₅), respectively. If the equation of T1 is written as $\text{ax + by + cz + d = 0}$ , the ratio of the constants a, b, c and d to one another is determined from the following three equations,

$\text{b.l₁₂ + cz₁ + d = 0 (1)}$

$\text{cz₂ + d = 0 (2)}$

$\text{a.l₂₅ + cz₅ + d = 0 (3)}$

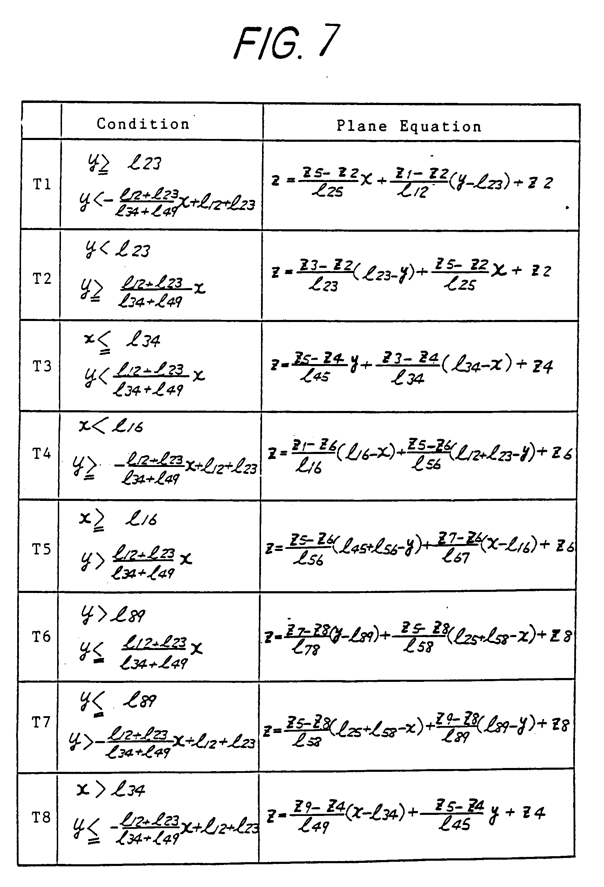

as: 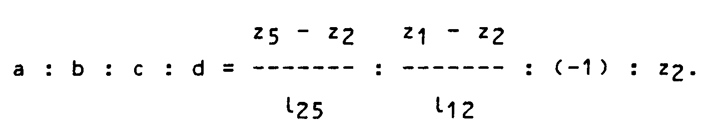
The equation of T1 is rewritten as follows: 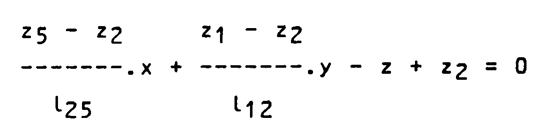
An equation for the variation of height z with x and y can be represented as: 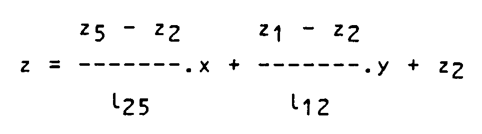
Since the origin of the plane T1 is shifted by an amount l₂₃ along the Y-axis from the origin (the corner P3) of the board, this equation should be written as 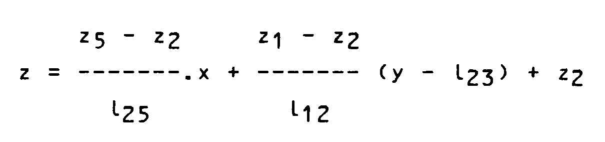
The eight equations of the eight triangles T1 to T8 of Fig. 4 summarised in Fig. 7. In the Figure, the "Condition" indicates the region of X and Y coordinates of points falling within the relevant triangle.

In Fig. 4, two diagonals of the rectangle, formed with far corner points P1, P3, P4, P7, are expressed in the coordinate system having the origin at P3 and having an X-axis made by connecting the points P3 and P9 and a Y-axis made by connecting the points P3 and P1. The origins of the plane equations of T1 and T2, T3 and T8, T4 and T5, and T6 and T7 in Fig. 7 are at P2, P4, P6 and P8 respectively.

Although the correction of the inspecting camera distance is based on a plane equation approximation, errors are within tolerance provided that the number of divisions is properly selected (the number of planes into which the board is considered to be divided is large enough).

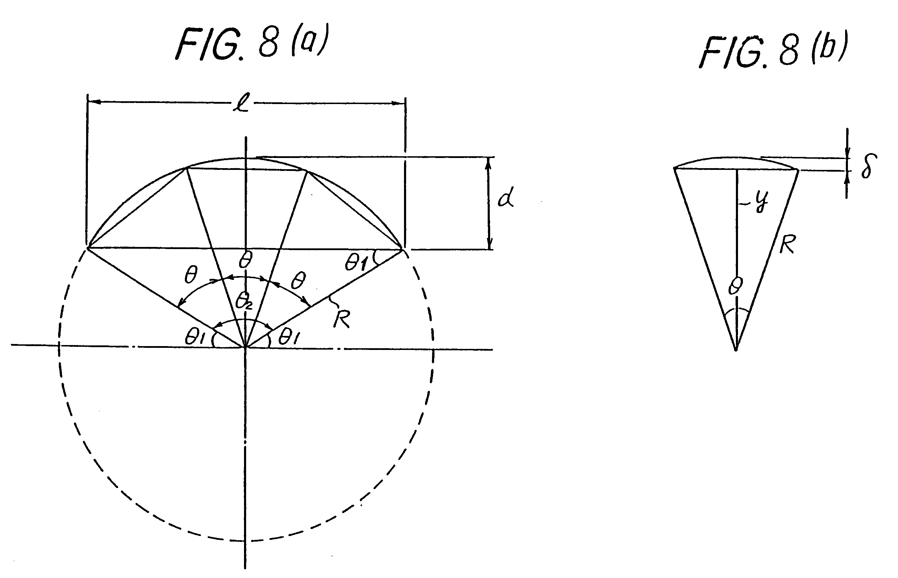

For the case of a simply curved surface as shown in Figs. 8(a) and 8(b), the relationship between errors and number of divisions will be discussed. The relation between a side length "l" of a printed wiring board, a distance variation of the board "d", and a radius of curvature R of the board is

$\text{R = (l² + 4 d²)/8d (11)}$

Let ϑ₂ be an angle encompassing the whole board and let ϑ be an angle encompassing a divided portion of the board, at the centre of the curvature, and let δ be a tolerance, then, from $\text{δ = R - y}$ and $\text{y = R cos (ϑ/2)}$ 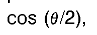 ,

$\text{ϑ = 2 cos⁻¹ ((R -δ)/R) (12)}$

is obtained.

In Fig. 8(a), it is obvious that

$\text{sin ϑ₁ = (R - d)/R,}$

then, from the above equation, ϑ₁ is obtained as

$\text{ϑ₁ = sin ⁻¹((R - d)/R).}$

Hence,

$\text{ϑ₂ = 180°- 2 sin⁻¹((R - d)/R) (13)}$

can be obtained.

Since the number of divisions "n" is ϑ₂/ϑ, n can be written as: 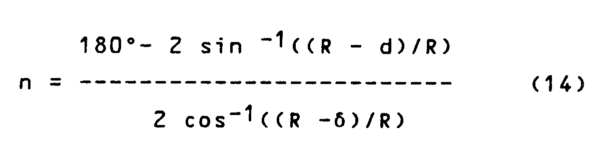
In Fig. 8(a), "l" is a side length, "d" indicates an amount of warp of the board, and "δ" is the tolerance of the inspecting camera distance.

When l = 280 mm, d = 0.86 mm and δ = 0.25 mm, the following results can be obtained: R = 11395.78 mm from equation (11), ϑ = 0.759 and ϑ₂ = 1.408 from equations (12) and (13), therefore n = 1.855.

When l = 200 mm and d and δ are the same as the above, the following results can be obtained similarly: R = 5814.38 mm, ϑ = 1.063, ϑ₂ = 1.971 and n = 1.854.

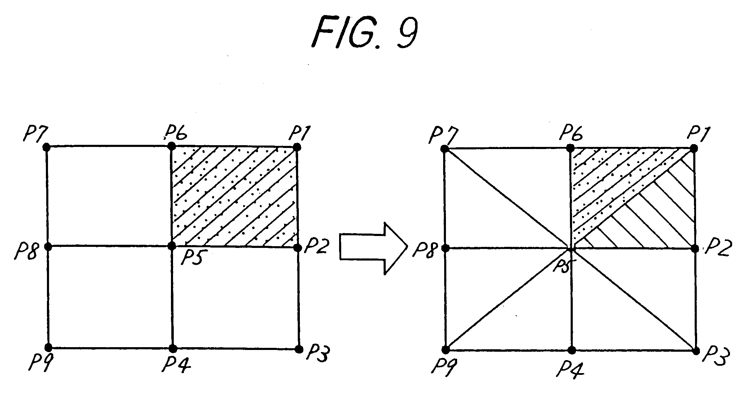

It is found that dividing the board into four rectangles is sufficient for the case described above. Dividing each rectangle into two triangles as shown in Fig. 9, eight plane equations are determined, one for each triangle.

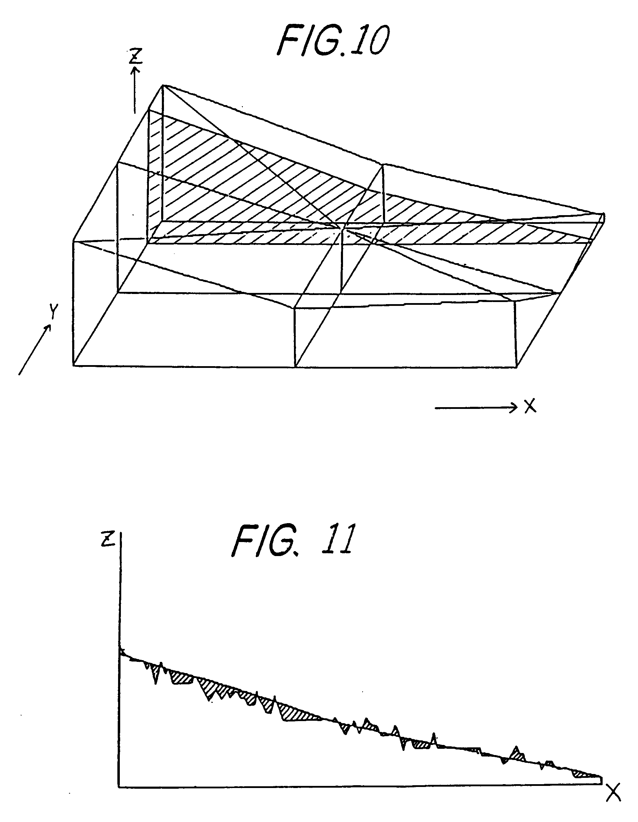

In Fig. 10, the distance variation of the board is illustrated in perspective view and the measured error in the approximation along the X direction is plotted in Fig. 11. The maximum error is approximately 0.1 mm.

In the above embodiment, the automatic focussing system operates with a TV camera, and the object of the inspection is the printed patterns on the printed wiring board. However, other observing means can be used with the automatic focussing system, and other objects, for example an arranged pattern of parts mounted on a board, can be inspected.

The present invention provides and includes within its scope an automatic focussing system for inspecting an object by observing the object, said automatic focussing system comprising:
means (1) for observing the object;
means (2) for designating a plurality of reference points on the object;
means (3) for measuring distances from the observing means to the reference points;
means (4) for calculating a plurality of plane equations for a plurality of triangular planes each formed by connecting three reference points being most neighboured to each other so as to avoid every line forming the triangular planes crossing to each other, said calculating means being performed under setting the object in X, Y and Z coordinates and by obtaining Z coordinates of the reference points from the distances measured by said means (3);
means (5) for designating an inspecting point from a plurality of inspecting points, each of the inspecting points being defined by the X and Y coordinates and being for aligning a line of sight of said means (1) with said each of inspecting points for observing a part, around said each of the inspecting points, of the object;
means (6) for selecting a triangular plane, which includes the X and Y coordinates of the designated inspecting point, from said plurality of the triangular planes;
means (7) for calculating a Z coordinate of the designated inspecting point by substituting the X and Y coordinates of the designated inspecting point for a surface plane equation of the selected triangular plane;
means (8) for focussing the observing means to the designated inspecting point by using the Z coordinate of the designated inspecting point;
means (9) for relatively moving a position of the object in X and Y directions so that the designated inspecting point is on the line of sight of the observing means, from a just before position of the object, in which a just before inspecting point has been on the line of sight of the observing means;
means (10) for inspecting the part, existing around the inspecting point, of the object by comparing with reference data of the object for inspection;
means (11) for executing said means (5), (6), (7) and (8) during executing said means (9);
means (12) for repeating execution of said means from (5) to (11) for inspecting a part, existing around a next inspecting point, of the object until parts, existing around whole inspecting points previously designated, of the object; and
means (13) for executing said means from (2) to (12) automatically.

In the automatic focussing system the means (13) may comprise:
a micro processing unit for respectively and sequentially executing said means from (2) to (12);
a read only memory for storing programs for executing operation of said micro processing unit;
a random access memory for storing data randomly produced in a period of executing the operation of said micro processing unit; and
a memory for storing said reference data of the object.

The automatic focussing system may be used for inspecting printed patterns on a printed wiring board, using a TV camera for observing the printed patterns.

Means (9) for inspecting the part, existing around the designated inspecting point, of the printed patterns may operate by comparing with reference data of the printed pattern, around the designated inspecting point, for inspection.

In the automatic focussing system the means (2) may comprise:
a slit mark projector for optically projecting a slit mark aslant on a surface of the printed wiring board, said slit mark making said TV camera output a video signal corresponding to said slit mark, changing a position of the video signal in the X coordinate in accordance with a change of the distance between said TV camera and the surface of the printed wiring board; and
means for processing the distance between said TV camera and the surface of the printed wiring board, from an amount of the change of the video signal position.

In an embodiment of the present invention, focussing of, for example, a TV camera for visually inspecting an object is executed, during movement from one inspection point, observed by the TV camera, to a next inspection point, by using a calculated distance from the TV camera to the next inspecting point, without measuring the actual distance. The distance to the next inspecting point is calculated from a plane equation representing one of a group of triangular planes formed over the object by connecting a plurality of reference points previously designated on the object. The plane equations are calculated before executing inspection, by using distances, actually measured by a distance measuring means, from the TV camera to the reference points.

## Claims

1. An automatic focussing system for inspecting an object by observing a surface of the object, the system comprising:
observation means, for observing the surface of the object, which surface is aligned generally with an X-Y plane, having a line of sight in the Z direction,
means for designating a plurality of reference points on the surface of the object,
measurement means, for measuring observation distances to the reference points, each observation distance corresponding to the line-of-sight Z-axis distance from the observation means to the reference point concerned,
means for deriving a plurality of plane equations, relating to respective non-overlapping plane surfaces each having vertices at neighbouring reference points, employing the measured Z-axis distances to the reference points, for representing deviations of the surface of the object from the X-Y plane;
the system further comprising:
inspection point designation means, for designating the X and Y coordinates of a point to be inspected on the surface of the object,
calculating means, for calculating, from the X and Y coordinates of the inspection point, the Z-coordinate of the point, employing that one of the plane equations relating to the plane surface which includes the X and Y coordinates of the inspection points,
focussing means, for focussing the observation means at an observation distance corresponding to the calculated Z-coordinate,
displacement means for relatively moving the object and the observation means to place the observation point in the line of sight of the observation means, operable to effect the relative movement whilst the calculating and focussing means are operating.

2. A system as claimed in claim 1, wherein the plane surfaces are triangular.

3. A system as claimed in claim 1 or 2, wherein the observation means are constituted by TV camera apparatus and the object to be inspected is a printed wiring board having printed patterns on the surface observed.

4. A system as claimed in claim 1, 2 or 3, comprising means, storing reference data, representing a desired surface configuration around an inspection point, and means for comparing data representing the surface configuration actually observed around the inspection point with the reference data.

5. A system as claimed in claim 4 when read as appended to claim 3, wherein the reference data represents the desired configuration of a printed pattern around the inspection point.

6. A system as claimed in any preceding claim, wherein the inspection point designation means are operable to designate the X and Y coordinates of a succession of inspection points, the calculating, focussing and displacement means carrying out their operations for each inspection point in turn.

7. A system as claimed in any preceding claim, including
a micro processing unit for controlling operation of the system,
a read only memory storing programs for controlling the micro processing unit,
a random access memory for storing working data generated during operation of the system,
a memory for storing reference data employed for inspecting the object, for example comprising a floppy disk.

8. A system as claimed in any preceding claim, wherein the observation means comprise TV camera apparatus and the measurement means comprise a slit mark projector for optically projecting a slit mark aslant onto the surface of the object, and wherein the TV camera apparatus is operable to provide a video signal corresponding to the slit mark, the disposition of the slit mark as represented by the video signal depending upon the distance between the observation distance between the video camera apparatus and the surface of the object where the slit mark falls.

## Patentansprüche

1. Automatisches Fokussierungssystem zum Untersuchen eines Objektes durch Beobachten einer Oberfläche des Objektes, welches System umfaßt:
Beobachtungsmittel zum Beobachten der Oberfläche des Objektes, welche Oberfläche im allgemeinen mit einer X-Y-Ebene ausgerichtet ist, mit einer Sichtlinie in der Z-Richtung,
Mittel zum Bestimmen einer Vielzahl von Bezugspunkten auf der Oberfläche des Objektes,
Messungsmittel zum Messen von Beobachtungsabständen zu den Bezugspunkten, wobei jeder Beobachtungsabstand dem Sichtlinien-Z-Achsen-Abstand von den Beobachtungsmitteln zum betreffenden Bezugspunkt entspricht,
Mittel zum Ableiten einer Vielzahl von Ebenengleichungen, die sich jeweils auf nicht-überlappende, ebene Oberflächen beziehen, die jeweils Scheitelpunkte an benachbarten Bezugspunkten besitzen, wobei die gemessenen Z-Achsen-Abstände zu den Bezugspunkten verwendet werden, um die Abweichungen der Oberfläche des Objektes von der X-Y-Ebene darzustellen;
welches System ferner umfaßt:
Untersuchungspunktbestimmungsmittel zum Bestimmen der X-und Y-Koordinate eines Punktes, der untersucht werden soll, auf der Oberfläche des Objektes,
Berechnungsmittel, um aus der X- und Y-Koordinate des Untersuchungspunktes die Z-Koordinate des Punktes zu berechnen, wobei jene eine der Ebenengleichungen verwendet wird, die sich auf die ebene Oberfläche bezieht, welche die X- und die Y-Koordinaten der Untersuchungspunkte enthält,
Fokussierungsmittel zum Fokussieren der Beobachtungsmittel bei einem Beobachtungsabstand, der der berechneten Z-Koordinate entspricht,
Versetzungsmittel zum relativen Bewegen des Objektes und der Beobachtungsmittel, um den Beobachtungspunkt in die Sichtlinie der Beobachtungsmittel zu setzen, betreibbar, um die relative Bewegung zu bewirken, während die Berechnungs- und Fokussierungsmittel arbeiten.

2. System, wie in Anspruch 1 beansprucht, worin die ebenen Oberflächen dreiseitig sind.

3. System, wie in Anspruch 1 oder 2 beansprucht, worin die Beobachtungsmittel durch ein TV-Kameragerät gebildet werden und das zu untersuchende Objekt eine gedruckte Schaltungskarte mit gedruckten Mustern auf der beobachteten Oberfläche ist.

4. System, wie in Anspruch 1, 2 oder 3 beansprucht, umfassend Mittel zum Speichern von Bezugsdaten, die eine erwünschte Oberflächenkonfiguration um einen Untersuchungspunkt herum darstellen, und Mittel zum Vergleichen von Daten, die die Oberflächenkonfiguration darstellen, die tatsächlich um den Untersuchungspunkt herum gemessen wurde, mit den Bezugsdaten.

5. System, wie in Anspruch 4 beansprucht, wenn er als abhängig von Anspruch 3 gelesen wird, worin die Bezugsdaten die erwünschte Konfiguration eines gedruckten Musters um den Untersuchungspunkt herum darstellen.

6. System, wie in irgendeinem vorhergehenden Anspruch beansprucht, worin die Untersuchungspunktbestimmungsmittel betreibbar sind, um die X- und Y-Koordinaten einer Abfolge von Untersuchungspunkten zu bestimmen, wobei die Berechnungs-, Fokussierungs- und Versetzungsmittel ihre Operationen wiederum für jeden Untersuchungspunkt ausführen.

7. System, wie in irgendeinem vorhergehenden Anspruch beansprucht, enthaltend
eine Mikroprozessoreinheit zum Steuern des Betriebs des Systems,
einen Nur-Lese-Speicher zum Speichern von Programmen zum Steuern der Mikroprozessoreinheit,
einen Speicher für wahlweisen Zugriff zum Speichern von Betriebsdaten, die während des Betriebs des Systems erzeugt werden,
einen Speicher, zum Beispiel eine Diskette, zum Speichern von Bezugsdaten, die verwendet werden, um das Objekt zu untersuchen.

8. System, wie in irgendeinem der vorhergehenden Ansprüche beansprucht, worin die Beobachtungsmittel ein TV-Kameragerät umfassen und die Messungsmittel einen Schlitzmarkierungsprojektor zum optischen Projizieren einer Schlitzmarkierung seitlich auf die Oberfläche des Objektes umfassen, und worin das TV-Kameragerät betreibbar ist, ein Videosignal zu liefern, welches der Schlitzmarkierung entspricht, wobei die Anordnung der Schlitzmarkierung, wie sie vom Videosignal dargestellt wird, vom Abstand zwischen dem Beobachtungsabstand zwischen dem Videokameragerät und der Oberfläche des Objektes, wo die Schlitzmarkierung auffällt, abhängt.

## Revendications

1. Système de focalisation automatique pour inspecter un objet en observant une surface de l'objet, le système comprenant :
un moyen d'observation pour observer la surface de l'objet, laquelle surface est alignée de façon générale avec un plan X-Y, comportant une ligne de visée suivant la direction Z ;
un moyen pour désigner une pluralité de points de référence sur la surface de l'objet ;
un moyen de mesure pour mesurer des distances d'observation par rapport aux points de référence, chaque distance d'observation correspondant à la distance d'axe Z de ligne de visée séparant le moyen d'observation par du point de référence concerné ;
un moyen pour dériver une pluralité d'équations de plan, relativement à des surfaces de plan en non chevauchement respectives dont chacune comporte des verticales au niveau de points de référence voisins, en utilisant les distances d'axe Z mesurées par rapport aux points de référence, pour représenter des déviations de la surface de l'objet par rapport au plan X-Y ;
le système comprenant en outre :
un moyen de désignation de point d'inspection pour désigner les coordonnées X et Y d'un point qui doit être inspecté situé sur la surface de l'objet ;
un moyen de calcul pour calculer, à partir des coordonnées X et Y du point d'inspection, la coordonnée Z du point en utilisant l'équation de plan prise parmi les équations de plan concernant la surface de plan qui inclut des coordonnées X et Y des points d'inspection ;
un moyen de focalisation pour focaliser le moyen d'observation à une distance d'observation correspondant à la coordonnée Z calculée ;
un moyen de déplacement pour déplacer de façon relative l'objet et le moyen d'observation afin de placer le point d'observation dans la ligne de visée du moyen d'observation, ce moyen pouvant fonctionner pour réaliser le mouvement relatif tandis que les moyens de calcul et de focalisation fonctionnent.

2. Système selon la revendication 1, dans lequel les surfaces de plan sont triangulaires.

3. Système selon la revendication 1 ou 2, dans lequel le moyen d'observation est constitué par un dispositif de caméra TV et l'objet qui doit être inspecté est une plaquette de câblage imprimée présentant des motifs imprimés sur la surface observée.

4. Système selon la revendication 1, 2 ou 3, comprenant un moyen qui stocke des données de référence, qui représente une configuration de surface souhaitée autour d'un point d'inspection et un moyen pour comparer des données représentant la configuration de surface réellement observée autour du point d'inspection aux données de référence.

5. Système selon la revendication 4 lorsqu'elle dépend de la revendication 3, dans lequel les données de référence représentent la configuration souhaitée d'un motif imprimé autour du point d'inspection.

6. Système selon l'une quelconque des revendications précédentes, dans lequel le moyen de désignation de point d'inspection peut fonctionner pour désigner les coordonnées X et Y d'une succession de points d'inspection, les moyens de calcul, de focalisation et de déplacement mettant en oeuvre leurs fonctionnements pour chaque point d'inspection tour à tour.

7. Système selon l'une quelconque des revendications précédentes, incluant :
une unité de microtraitement pour contrôler le fonctionnement du système ;
une mémoire morte qui stocke des programmes pour contrôler l'unité de microtraitement ;
une mémoire vive pour stocker des données de travail générées pendant le fonctionnement du système ;
une mémoire pour stocker des données de référence utilisées pour inspecter l'objet, comprenant par exemple un disque souple.

8. Système selon l'une quelconque des revendications précédentes, dans lequel le moyen d'observation comprend un dispositif de caméra TV et le moyen de mesure comprend un projecteur de repère en fente pour projeter optiquement un repère en fente à l'oblique sur la surface de l'objet et dans lequel le dispositif de caméra TV peut fonctionner pour produire un signal vidéo correspondant au repère en fente, la disposition du repère en fente telle que représentée par le signal vidéo dépendant de la distance d'observation qui sépare le dispositif de caméra vidéo de la surface de l'objet où le repère en fente tombe.
